# EUROPEAN PATENT APPLICATION

(11) **EP 3 848 765 A1**
(43) Date of publication of application: **14.07.2021**
(21) Application number: 18932927.9
(22) Date of filing: 07.09.2018
(51) Int. Cl.: G05B 19/18, G05B 19/409

(54) **CONTROL DEVICE FOR MACHINE TOOL**

(71) Applicant: Makino Milling Machine Co., Ltd., Tokyo 152-8578 (JP)
(72) Inventor: SATO, Hitoshi, Tokyo 152-8578 (JP); MASUMIYA, Yasunori, Tokyo 152-8578 (JP); YOSHIDA, Tomoo, Tokyo 152-8578 (JP)
(74) Representative: McWilliams, David John
(86) International application number: PCT/JP2018/033288
(87) International publication number: WO 2020/049733

(57) **Abstract**

A control device (100) for a machine tool, the control device (100) being provided with: an individual database (108) that stores voice data and image data for the face for each of a plurality of persons in association with the respective person's ID; an input command database (120) that stores commands that can be inputted into a machine tool; an imaging device (102) that images the face of a person; a microphone (104) that inputs a voice; and a microprocessor that processes the image data for the face imaged by the imaging device and the voice data inputted from the microphone. The microprocessor performs facial authentication on the basis of the image data of the face, and performs voice authentication on the basis of voice data inputted from the microphone. If the voice is a voice produced by a facially authenticated person, the microprocessor analyzes voice data, searches the input command database on the basis of the analysis result, and inputs a command corresponding to the voice data into the machine tool.

## Description

### FIELD

The present invention relates to a control device for a machine tool which is configured such that an operator can give various instructions to the machine tool by voice input.

### BACKGROUND

Patent Literature 1 describes a numerical control machine tool comprising a plurality of control axes, wherein an input voice is identified, a drive signal generation command signal corresponding to the voice is output, a drive signal is output based on the drive signal generation command signal, and each control axis is controlled based on the drive signal.

### [CITATION LIST]

### [PATENT LITERATURE]

[PTL 1] Japanese Unexamined Patent Publication (Kokai) No. 01-125605

### SUMMARY

### [TECHNICAL PROBLEM]

In factories where machine tools are installed, it is common that a plurality of operators operate a plurality of machine tools. In such a case, in the invention of Patent Literature 1, since it is unclear who issued the command by voice to which machine tool, commands issued by the operator by voice may not be input correctly to the intended machine tool.

The present invention aims to solve such problems of the prior art, and an object thereof is to provide a control device for a machine tool with which an operator performing voice input can be accurately specified and which can perform optimal operation support in accordance with the preferences and characteristics of each operator.

### [SOLUTION TO PROBLEM]

In order to achieve the above object, according to the present invention, there is provided a control device for a machine tool, comprising an individual database in which face data and voice data of a plurality of persons are stored in association with an ID of the respective person, an input command database in which commands which can be input to the machine tool are stored, an imaging device for imaging a face of a person, a microphone with which voice is input, and a microprocessor for processing the data of the face of the person imaged with the imaging device and the voice data input from the microphone, wherein
the microprocessor performs face authentication based on the face data, performs when voice data input from the microphone is processed, operation support of the respective person accompanying the processing based on the individual database for each person specified by the face authentication, and analyzes the voice data, searches the input command database based on an analysis result, and inputs a command corresponding to the voice data to the machine tool.

### [ADVANTAGEOUS EFFECTS OF INVENTION]

According to the present invention, when an operator inputs a command by voice to the machine tool, it is determined whether the input voice data is input by a previously face-authenticated operator, whereby even when a plurality of operators are working around the machine tool, the operator (individual) who commands the machine tool can be reliably specified, and malfunctions of the machine tool can be reliably prevented.

Since the microprocessor generates an operation screen matching at least one item selected from a habit, preference, machining know-how, machining process sequence, physical qualities, proficiency, and past history of each person stored in the individual database on the display, usage is easy for each person and the machine tool can be operated by executing the optimum processing method in accordance with proficiency. Further, since the microprocessor submits a query related to missing information to the voice data input person if sufficient information for searching the input command database has not been obtained when the voice data has been analyzed, malfunctions can be prevented without interrupting the operations of the control device of the machine tool. In this manner, even operators with low proficiency can operate the machine tool without malfunctions, and skilled operators will be able to efficiently perform advanced machining utilizing experience.

### BRIEF DESCRIPTION OF DRAWINGS

FIG. 1 is a block diagram showing a control device for a machine tool according to a preferred embodiment of the present invention.
FIG. 2 is a flowchart showing control by the control device of FIG. 1

### DESCRIPTION OF EMBODIMENTS

The preferred embodiments of the present invention will be described below with reference to the attached drawings.

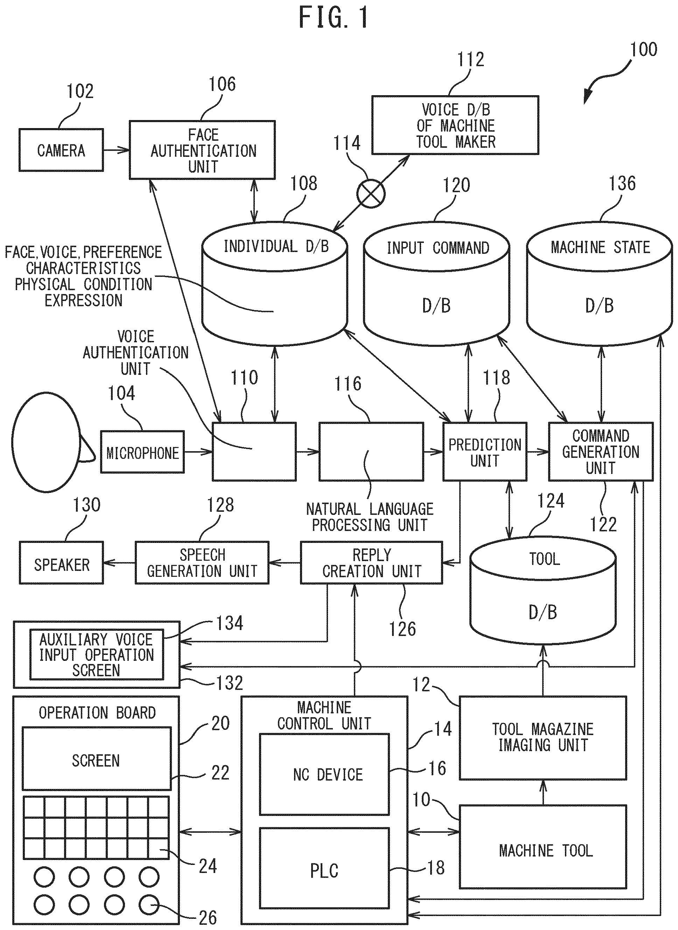

In FIG. 1, a voice input control device 100 according to a preferred embodiment of the present invention controls a machine tool 10 in collaboration with a machine control unit 14. The machine tool 10 can be configured as a machining center comprising a machining device (not illustrated) comprising a rotary spindle which supports a rotary tool detachably on the tip thereof, a table to which a workpiece is affixed, and a feed axis device which linearly and relatively feeds the rotary spindle and the table in at least three orthogonal axial directions, ]a tool magazine (not illustrated) in which pa plurality of tools are housed, a tool exchange device (not illustrated) which changes rotary tools between the rotary spindle of the machining device and the tool magazine, a coolant supply device (not illustrated) which supplies coolant to the machining device and the tool magazine, etc. The machining device constituting the machine tool 10 may be a lathe in which a workpiece is attached to a rotating spindle and a stationary tool (cutting bite) is pressed against the rotating workpiece to perform cutting.

The machine control unit 14 can comprise an NC device 16 which controls at least a spindle motor (not illustrated) which drives the rotary spindle of the machining device and X-axis, Y-axis, and Z-axis feed axis motors (not illustrated) of linear three orthogonal axial feed axis devices, and a PLC 18 which controls the tool magazine of the machine tool 10, the tool exchange device, the coolant supply device, etc. An operation board 20 comprising a keyboard and switches 24 for inputting various commands to the machine control unit 14, a display unit 24 for displaying the operating state of the machine tool 10, and an on-off switch 26 for the machine tool 10 is attached to a cover (not illustrated) surrounding the machine tool 10.

The voice input control device 100 includes, as primary constituent elements, a face authentication unit 106, a voice authentication unit 110, a natural language processing unit 116, a prediction unit 118, a command generation unit 122, a reply creation unit 126, speech generation unit 128, an individual database 108, an input command database 120, and machine state data base 136, and can be constituted by a computer device comprising a CPU (central processing unit), memory devices such as RAM (random access memory) and ROM (read-only memory), storage devices such as an HDD (hard disk drive) and SSD (solid-state drive), an input/output port, bidirectional busses connecting these components to each other, and associated software.

The voice input control device 100 can be composed of one computer device or a plurality of computer devices. Alternatively, it may be configured in software as part of the machine control unit 14 for the machine tool 10. Further, one or a plurality of the individual database 108, the input command database 120, the tool database 124, and the machine state database 136 may be constituted from a storage device(s) such as a network drive(s) connected to the computer device.

The individual database 108 collects a standard face image, voice data including dialect and unique industry terms and phrases, operation screen preferences, and operation board switch operation sequence habits of each operator, as well as past alarm generation history, operator characteristics such as physical characteristics, the past physical condition of each operator, and the relationship between facial expressions and face images and voice data, and is continuously updated.

Commands which can be input to the machine tool 10 are stored in the input command database 120 in, for example, a list format. The tool database 124 collects data such as the IDs, types, names, sizes, materials, and wear states of tools present in the factory, including the tools imaged by a tool magazine imaging unit 12, and is continuously updated. The machine state database 136 stores the current output of the sensors installed in each part of the machine, which represents the state of the machine such as opening/closing of the operator door, clamping and unclamping of the spindle tool, and whether or not the feed axis has returned to the origin, and is continuously updated.

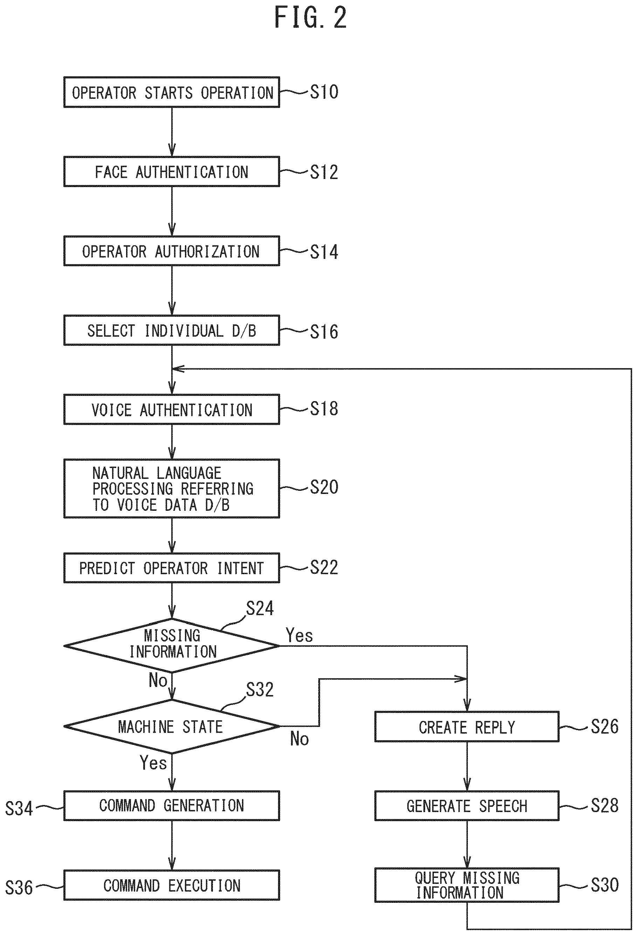

The operation of the voice input control device 100 will be described below with reference to the flowchart of FIG. 2.

When the operator starts operations (step S10), first, the face of the operator is imaged by the camera 102 (step S12). The face authentication unit 106 analyzes the image data of the face of the operator face imaged by the camera 102, searches the individual database 108 based on the image data, and identifies and specifies the individual imaged by the camera 102. When the captured image data matches one set of image data in the individual database 108 as a result of search, the operator is authenticated as an authorized operator to operate the machine tool 10 (step S14), and the personal data of the operator stored in the individual database 108 is selected. The individual database 108 can also be connected to a voice database 112 of the machine tool maker via the internet 114. The voice database 112 of the machine tool maker is a large-scale database collected nationwide or worldwide.

For example, face image data and voice data of the operators in the factory are stored in the individual database 108 in association with the IDs of the operators. In the individual database 108, the names, affiliations, authority, etc., are stored in association with the IDs of the operators. The face image data can include, in addition to the standard operator face image data, image data related to the specific facial expressions of the operator, for example, facial expressions when the operator is in poor physical condition. Similarly, the voice data can include voice data when the operator is in poor physical condition, in addition to standard voice data.

Authority can include the machine numbers of the machines which can be operated by the operator and the types of operations. The types of operations include, for example, restrictions on the machining process such that the operator is permitted to perform machining using only three orthogonal axes, but is not permitted to perform machining using five axes, and can include maintenance operation restrictions such as the ability to inspect machine tools but not the replacement of consumables.

Further, operator characteristics can be stored in the individual database 108 in association with the ID of the operator. Operator characteristics can include items such as operator height, native language, eyesight, hearing, color vision, proficiency, and past operation history. The vertical position of the operation board 20 can be changed according to the height of the operator, the language to be displayed on the display section 22 of the operation board 20 can be set according to the native language of the operator, the magnification of the screen displayed on the display unit 22 can be changed in accordance with eyesight, the volume of the speaker 130 can be changed in accordance with hearing, the hue, brightness, and saturation of the screen displayed on the display unit 22 can be changed according to the color vision, and the screen displayed on the display unit 22 can be changed according to the proficiency of the operator. Changes in the screen in accordance with proficiency can be performed so that an interactive initial screen is displayed at startup for operators with low proficiency, and, for example, a workpiece coordinate system setting screen can be displayed at startup in accordance with the preferences of the operator for operators with high proficiency.

When the operator makes a voice input through the microphone 104, the voice authentication unit 110 analyzes the voice data of the person (operator) input through the microphone 104, searches the individual database 108 based on the voice data, identifies and specifies the individual who issued the voice input from microphone 104, and determines whether the input voice is the voice of an authenticated operator (step S18).

In this manner, at the time of voice input, authentication is performed again based on the input voice data, and it is determined whether or not the operator who is performing voice input is the previously face-authenticated operator, whereby when a plurality of operators are working around the machine tool 10, the operator (individual) who commands the machine tool 10 can be reliably specified, and malfunctions can be reliably prevented.

Next, the voice data is output from the voice authentication unit 110 to the natural language processing unit 116. The natural language processing unit 116 receives the voice data from the voice authentication unit 110, lexically-analyzes the voice data, and generates a series of tokens (token string) (step S20). The prediction unit 118 receives a token string from the natural language processing unit 116, searches the input command database 120 based on the token string, and predicts the command that the operator is attempting to input or the intention of the operator (step S22). A list of commands which can be input to the machine tool 10 is stored in the input command database 120.

If the command the operator is attempting to input is found in the input command database 120 based on the token string (No in step S24), the prediction unit 118 associates the name of the command with the voice data and outputs the name of this command to the command generation unit 122. Note that the input command database 120 may be searched while referring to the past operation history of the operator.

The command generation unit 122 refers to the machine state database 136 and can determine whether or not the machine tool 10 can execute the command corresponding to the name of the command received from the prediction unit 118 (step S32). When the machine tool 10 is in a state in which the command can be executed (Yes in step S32), the command generation unit 122 generates the command (step S34) and outputs it to the machine control unit 14. The machine control unit 14 executes the command received from the command generation unit 122 (step S36) to control the machine tool 10 and displays as such on the display unit 22 of the operation board 20.

When the token string received from the natural language processing unit 116 is missing information and the command the operator is attempting to input cannot be specified even with reference to the input command database 120 (Yes in step S24), the prediction unit 118 outputs a command for issuing a reply as such to the operator to the reply creation unit 126 (step S26). For example, when there is insufficient information for the prediction and the command the operator is attempting to input cannot be specified, the prediction unit 118 instructs the reply creation unit 126 to create a reply to query the operator for the missing information. Alternatively, if the corresponding command is not found in the input command database 120, the prediction unit 118 instructs the reply creation unit 126 to notify the operator that the command cannot be found.

The reply creation unit 126 creates a reply to the voice input of the operator based on the command from the prediction unit 118 (step S28). This reply can be created, for example, as text data. The reply creation unit 126 outputs the created reply to the speech generation unit 128. The speech generation unit 128 reads the response received from the reply creation unit 126, for example, the text data, and outputs it as speech from the speaker 138 (step S30). The reply creation unit 126 may also display the created reply text data on a display 134 of a terminal device, for example, a handheld computer device 132 such as a tablet or smartphone. This display 134 is also an auxiliary voice input operation screen.

When the command generation unit 122 refers to the machine state database 136, if the machine tool 10 is not in a state in which the command can be executed (No in step S32), the command generation unit 122 outputs a command to the reply creation unit 126 to notify the operator as such (step S26). The reply creation unit 126 creates text data indicating that the machine tool 10 is not in a state in which the command can be executed, based on the command from the command generation unit 122 (step S28). The reply creation unit 126 outputs the created text data to the speech generation unit 128, and the speech generation unit 128 reads the text data and outputs it as a voice signal from the speaker 138 (step S30). The reply creation unit 126 may also display the created text data on the display 134 of the terminal device 132. For example, text data indicating "The operator door is open and the command cannot be executed. Please close the operator door." can be displayed or read aloud and output as speech.

The prediction unit 118 may also refer to the tool database 124 to determine if a tool suitable for the command associated with voice data has been prepared. If the tool has not been prepared, the prediction unit 118 outputs a command to the reply creation unit 126 that a reply as such should be returned to the operator.

As an example, when the operator commands "spindle tool change", the prediction unit 118 returns a query asking "Which tool would you like to replace?". When the operator further commands "replace with a ball end mill having a tool diameter of 10 mm", the prediction unit 118 refers to the tool database 124 in which tool data of all of the tools imaged by the tool magazine imaging unit 12 and stored in the tool magazine is stored, and for example, the tool status description "there are no 10 mm ball end mills. There is a 20 mm ball end mill. Would you like to replace that instead?" is returned along with a query.

Furthermore, the prediction unit 118 can search the individual database 108 based on at least one of the image data and voice data of the operator, predict the physical and psychological states thereof, and alert the operator as necessary. For example, if the operator is determined to be in a poor physical condition, the prediction unit 118 can instruct the reply creation unit 126 to create a reply that prompts the operator to take turns working with another operator.

Though the face authentication unit 106 analyzes the image data of the face of the operator imaged by the camera 102 to identify the individual in the embodiments described above, in place of analyzing the image data of the face, other data of face such as data of features of each part of the face and data of the positional relationships between parts thereof can be used for the analysis.

### REFERENCE SIGNS LIST

- 10: machine tool
- 14: machine control unit
- 20: operation board
- 102: camera
- 104: microphone
- 108: individual database
- 118: prediction unit
- 120: input command database
- 124: tool database

## Claims

1. A control device for a machine tool, comprising:
an individual database in which face data and voice data of a plurality of persons are stored in association with an ID of the respective person,
an input command database in which commands which can be input to the machine tool are stored,
an imaging device for imaging a face of a person,
a microphone with which voice is input, and
a microprocessor for processing the data of the face of the person imaged with the imaging device and the voice data input from the microphone, wherein
the microprocessor:
performs face authentication based on the face data,
performs when voice data input from the microphone is processed, operation support of the respective person accompanying the processing based on the individual database for each person specified by the face authentication, and
analyzes the voice data, searches the input command database based on an analysis result, and inputs a command corresponding to the voice data to the machine tool.

2. The control device for a machine tool according to claim 1, wherein when the voice data has been analyzed, if sufficient information for searching the input command database has not been obtained, the microprocessor submits a query related to missing information to the voice data input person.

3. The control device for a machine tool according to claim 2, wherein the microprocessor performs the query by generating sound.

4. The control device for a machine tool according to claim 2, wherein the microprocessor performs the query by displaying characters on a display.

5. The control device for a machine tool according to claim 1, wherein the individual database includes at least one item selected from a habit, preference, machining know-how, machining process sequence, height, native language, eyesight, hearing, color vision, proficiency, and past operation history of each stored person, and
the microprocessor generates an operation screen matching at least one item selected from a habit, preference, machining know-how, machining process sequence, height, native language, eyesight, hearing, color vision, proficiency, and past operation history of a person who has performed voice input on a display.

6. The control device for a machine tool according to claim 1, wherein the microprocessor predicts a physical and psychological state of a person who has performed voice input based on the face data, the voice data, and the individual database, and alerts the person who has performed voice input as needed.
